# EUROPEAN PATENT APPLICATION

(11) **EP 2 209 080 A1**
(43) Date of publication of application: **21.07.2010**
(21) Application number: 09305051.6
(22) Date of filing: 20.01.2009
(51) Int. Cl.: G06K 19/073, H04W 12/00, H04L 29/08

(54) **Method of loading data in an electronic device**

(71) Applicant: Gemalto SA, 92190 Meudon (FR)
(72) Inventor: Bordron, Damien, 83680, NANS LES PINS (FR)

(57) **Abstract**

The invention is a method of loading a data in an electronic device. The electronic device comprises a security domain associated to a service provider and comprises a first key. The method comprises the step of allocating a limited right to a second entity in the security domain. The limited right provides an authorization which is limited to the management of a loading command intended to be executed by the electronic device for loading the data in the security domain and to the use of an audit command which allows the second entity to retrieve an audit data related to the loading command execution.

## Description

### (Field of the invention)

The present invention relates to methods of loading data in an electronic device. It relates particularly to methods of sending applicative data to an application embedded in a portable electronic device. The present invention is well suited for sending data to applets embedded in a portable electronic device like smart cards.

### (Prior art)

Portable electronic devices are machines comprising a memory, a microprocessor and an operating system for computing treatments. In general, portable electronic devices comprise a plurality of memories of different types. For example, they may comprise memory of RAM, ROM, EEPROM or Flash type. For instance, portable electronic tokens with limited resources and smart cards are portable electronic devices. A portable electronic device such as a smart card may contain applications in the form of applets. These applets are intended to be executed through an object-oriented system which may be a virtual machine on a Java Card ®. SIM smart cards may be accessed by a remote server via an over the air channel, known as OTA. OTA mechanism is defined by the ETSI SCP 102.225 and ETSI-SCP 102.226 standards. The OTA channel allows accessing data and applications which are embedded in a SIM card. Only smart cards intended to be used in Telecom domain are able to manage an OTA communication. In particular SIM cards offer OTA features. In smart card domain, a service provider is an entity who offers services intended to be deployed on smart cards. In particular, these services may be implemented through applications which need to be loaded and installed in smart cards.

A service provider may own specific rights in a smart card, where these specific rights authorized the loading of data related to an application in a specific area dedicated to the service provider. In general, a service provider does not own a material framework allowing sending data to a smart card which is on the field.

A mobile network operator (MNO) owns a material infrastructure allowing sending data to a smart card which is on the field. The material infrastructure is the mobile network of the MNO. The MNO may not have specific rights that authorize the loading of data related to a targeted application.

The service provider may ask a trusted service manager (TSM) for having the applicative data loaded in the smart card. In this case the service provider delegates the data loading to the TSM. Thus the TSM is in charge of the service delivery. The TSM may use the MNO infrastructure in order to carry out the application loading and installation. In particular the loading of data may be performed through the OTA mechanism whose administrative keys are owned by the MNO.

The confidentiality shall be respected between the mobile network operator, the trusted service manager and the service provider. In particular, the TSM does not have the administrative keys belonging to the MNO and the trusted service manager does not have the keys belonging to the service provider.

There is a need to have the trusted service manager able to securely load data in a smart card which is on the field. The trusted service manager must be able to give the service provider proof of the correct achievement of the loading. The trusted service manager must be able to give the MNO proof of the correct achievement of a treatment on a given smart card.

### (Summary of the Invention)

An object of the invention is to solve the above mentioned technical problems.

The object of the present invention is a method of loading a first data in an electronic device. The electronic device comprises a security domain which is associated to a first entity. In other words the first entity has the credentials allowing to fully manage the security domain. The security domain comprises a first key. The method comprises the step of allocating a limited right to a second entity in the security domain.

Advantageously, the limited right may provide an authorization which is limited to the management of a loading command intended to be executed by the electronic device for loading the first data in the security domain and limited to the use of an audit command intended to be executed in the security domain. The audit command may allow the second entity to retrieve an audit data related to the loading command execution.

In a preferred embodiment, the electronic device may comprise a specific data, and the security domain may comprise a transaction log. The second entity may be intended to communicate with the electronic device through a mobile telecom network managed by a third entity. The method may comprise the steps of:
- generating the loading command by using the limited right,
- sending the loading command to the security domain,
- after execution of said loading command, identifying a second data related to the loading command execution and generating a ciphered data from the second data by using the limited right,
- identifying a third data related to the loading command execution and generating a certificate from said third data by using said specific data as a key,
- recording the ciphered data and the certificate into the transaction log,
- on receipt of the audit command, getting said ciphered data and said certificate from the transaction log, then sending the ciphered data and the certificate to the second entity.

The method may comprise the further steps of sending the ciphered data to the first entity and sending the certificate to the third entity.

Advantageously, the electronic device may comprise an identifier specific to said electronic device and the specific data may be built from said identifier.

The security domain may comprise an identifier and the specific data may be built from the identifier of the security domain.

The first data may be intended to target an application which belongs to the security domain. The application may comprise an identifier and the specific data may be built from the identifier of the application.

The ciphered data and the certificate may be generated for a set of several commands received by the security domain.

Another object of the invention is a portable electronic device comprising a security domain and a first means capable of managing a command allowing to create a limited right in the security domain.

Advantageously, the portable electronic device may comprise a second means capable of managing a command allowing to create a security domain which comprises a transaction log.

The security domain may be associated to a first entity and may being intended to comprise a targeted applet. The portable electronic device may be intended to receive a loading command for loading a first data corresponding to the targeted applet. The portable electronic device may comprise a limited right in said security domain. The limited right may providing an authorization which is limited to the management of the loading command intended to load the first data in the security domain and limited to the management of an audit command intended to be executed in the security domain. The audit command may allow retrieving audit data related to the loading command.

Advantageously, the security domain may comprise a first key. The electronic device may comprise a specific data, third, fourth, fifth, and sixth means. The third means may be capable of identifying a second data related to the loading command execution and may be capable of generating a ciphered data from the second data by using the first key. The fourth means may be capable of identifying a third data related to the loading command execution and may be capable of generating a certificate from said third data by using the specific data as a key. The fifth means may be capable of recording the ciphered data and the certificate into the transaction log. The sixth means may be capable of sending the ciphered data and the certificate in response to an audit command.

In a preferred embodiment, the portable electronic device may be a smart card.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a portable electronic device and an example of communication exchanges between a MNO, a trusted service manager, a service provider and a portable electronic device according to the invention; and
- Figure 2 is an example of step sequence for loading applicative data to a SIM smart card according to the invention.

### (Detailed description of the preferred embodiments)

The invention may apply to any types of portable electronic devices able to manage an OTA session. In this specification, the portable electronic device is a SIM smart card but it could be any other kind of portable electronic device offering SIM Telecom features and intended to be connected to a telecom terminal.

An advantage of the invention is to ensure a full confidentiality between the mobile network operator, the trusted service manager and the service provider. The invention allows the trusted service manager to prove the correct execution of a command in an electronic device. In particular, thanks to the invention, the trusted service manager is able to provide the service provider with a first proof that can be checked by the service provider only. Thanks to the invention, the trusted service manager is able to provide the MNO with a second proof that can be checked by the mobile network operator only.

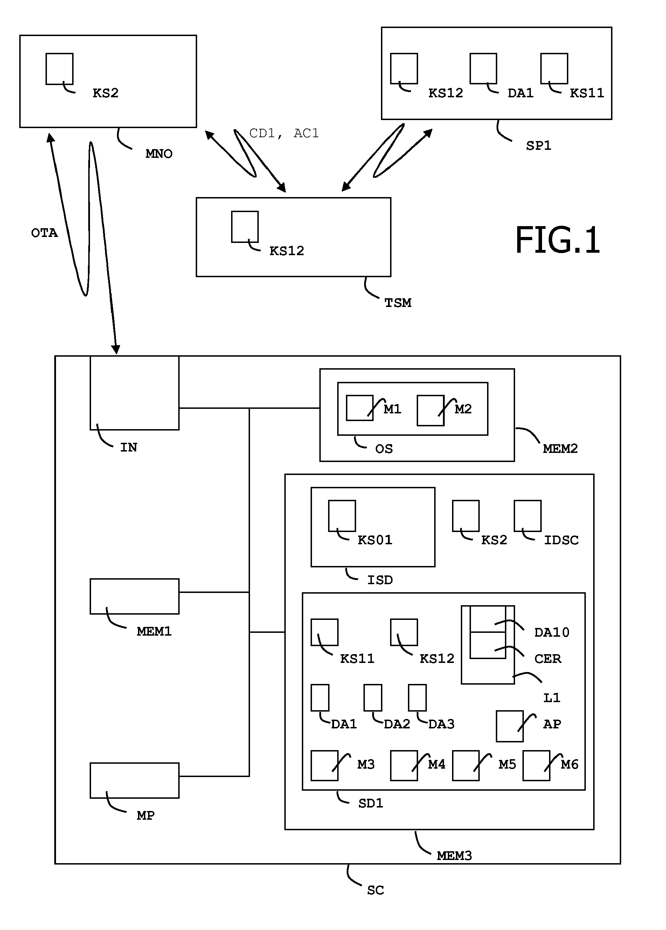

**Figure 1** shows the architecture of a portable electronic device SC of SIM card type according to a preferred embodiment of the invention.

The portable electronic device SC comprises a working memory MEM1 of RAM type, two non volatile memories MEM2 and MEM3, a microprocessor MP and a communication interface IN. The non volatile memory MEM2 comprises an operating system OS.

The non volatile memory MEM3 comprises a specific data KS2, an identifier IDSC specific to the electronic device SC, an Issuer security domain ISD and another security domain SD1. The Issuer security domain ISD is associated to the mobile network operator MNO that controls the SIM card SC. The Issuer security domain ISD comprises a key set KS01. The security domain SD1 is associated to a service provider SP1. The security domain SD1 comprises a targeted applet AP, a transaction log L1, two key sets KS11 and KS12 and four means M3, M4, M5 and M6. The service provider SP1 is able to manage the security domain SD1 since SP1 owns the key set KS11.

The operating system OS comprises a means M1 which is able to manage a command allowing to create a limited right KS12 in a security domain of the portable electronic device SC. In particular, the means M1 may be used for creating a limited right KS12 in the security domain SD1.

The operating system OS comprises a means M2 which is able to manage a command allowing to create a security domain that comprises a transaction log. In particular, the means M2 may be used for creating the security domain SD1 comprising a transaction log L1.

The electronic device SC is assumed to receive a loading command CD1 which is intended to be executed in the security domain SD1. The means M3 is capable of identifying a data DA2 related to the execution of the command CD1. The means M3 is capable of generating a ciphered data DA10 from the data DA2 by using the first key KS11. The second means M4 is capable of identifying a data DA3 related to the execution of the command CD1. The means M4 is capable of generating a certificate CER from the data DA3 by using the specific data KS2 as a key. The means M5 is capable of recording the ciphered data DA10 and the certificate CER into the transaction log L1. The means M6 is capable of sending the ciphered data DA10 and the certificate CER in response to an audit command AC1 received by the electronic device SC.

The four means M3 to M6 may be implemented as any combinations of one or several software components. In a preferred embodiment, the four means M3 to M6 are implemented as a unique software component which may be embedded in the operating system OS.

The two memories MEM2 and MEM3 may be implemented as any combinations of one, two or more memories. These memories may be NAND flash or EEPROM memory or another type of non volatile memory.

The SIM card SC is intended to exchange messages with a telecom handset through the communication interface IN. The telecom handset HM is intended to exchange messages with the MNO infrastructure via the OTA mechanism. The telecom handset is not drawn in Figure 1.

The MNO owns the specific data KS2. The service provider SP1 owns the key set KS11 and an applicative data DA1 intended to be loaded in the device SC for personalizing the application AP. The trusted service manager TSM owns the key set KS12. The trusted service manager TSM is capable of communicating with both the MNO and the service provider SP1.

The trusted service manager TSM may exchange data with the service provider SP1 through a secure communication channel. For example, the TSM may communicate with the service provider SP1 through a virtual Private network based on the Intranet. A similar secure link is used between the trusted service manager TSM and the mobile network operator MNO.

Alternatively the MNO may be the trusted service manager TSM or the service provider SP1 may be the trusted service manager TSM.

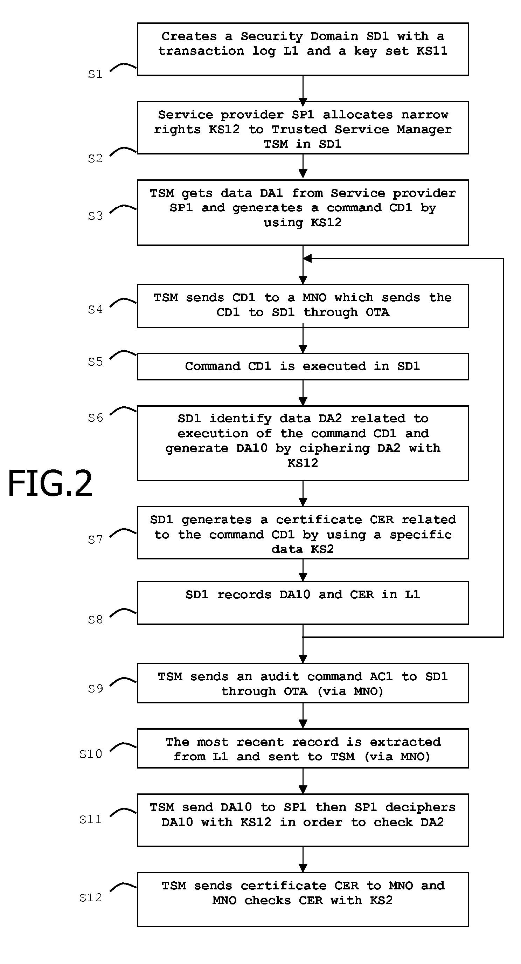

**Figure 2** shows an example of a step sequence for sending applicative data to a targeted applet AP embedded in a SIM smart card SC according to the invention. In this example, the SIM is a Javacard ® and the applet AP has been designed in order to comply with GlobalPlatform ® v2.x requirements.

First a security domain SD1 is created in the smart card SC at step S1. The security domain SD1 comprises a key set KS11 and a transaction log L1. The security domain SD1 is associated to the service provider SP1. In other words, the service provider SP1 owns the key set KS11 that allows managing and controlling the security domain SD1. The security domain SD1 is created by the MNO which is the issuer of the SIM card SC. Access rights of the transaction log L1 is restricted to the security domain SD1. Advantageously, the transaction log L1 is implemented as a cyclic file. Alternatively, the transaction log L1 may be a list or a table.

In a preferred embodiment, the creation of the security domain SD1 is performed thanks to an enhanced Install SD command based on the INSTALL command of GlobalPlatform ® standard. The enhanced Install SD command has parameters allowing initializing the transaction log. For example, the record size and the number of records may be part of the parameters when the transaction log L1 is a cyclic file. The enhanced Install SD command is executed by the operating system OS.

At step S2, the service provider SP1 allocates limited rights KS12 to the trusted service manager TSM in the security domain SD1. The limited right KS12 is stored in the security domain SD1 and is provided to the trusted service manager TSM. The limited right KS12 corresponds to a subset of the rights associated to the key set KS11. The limited right KS12 corresponds to partial rights on the security domain SD1. In other words, the limited right KS12 is a subset of the rights corresponding to the key set KS11. In particular, the limited right KS12 may provide an authorization which is limited to the management of a loading command CD1 intended to load data in the security domain SD1 and limited to the use of an audit command AC1 intended to be executed by the security domain SD1, where the audit command AC1 allows the trusted service manager TSM to retrieve an audit data DA10 and CER which is related to the command CD1.

In a preferred embodiment, the allocation of the limited right KS12 is performed thanks to an enhanced Put Key command based on the PUT KEY GP command. The enhanced Put Key command has a parameter that allows specifying the kind of rights: usual or limited. The parameter may be managed through the Tag-Length-Value mechanism, also named BER-TLV. (See ISO 8825-1 standard). In a preferred embodiment, a list of operations authorized in the security domain SD1 is associated to rights of limited type. The list of authorized operations may be preset in the SIM card SC. Alternatively, when the rights are of limited type, additional parameters may be added to the enhanced Put Key command in order to define the list of authorized operations in the security domain SD1. For instance, the Key Access parameter as defined by the GlobalPlatform ® standard (see Table 11-18: Key Access coding) may be upgraded according to the following example. When the Key access value is set to "0x10", the key can be used only for authentication on the Security Domain SD1 and for running the Audit command AC1 in the Security Domain SD1. When the Key access value is set to "0x18", the key can be used only for authentication on the Security Domain SD1, for running a store data command CD1 and for running the audit command AC1 in the Security Domain SD1.

The security domain SD1 may be created during the personalization stage or may be created in a further stage. In particular, the MNO may create the security domain SD1 via OTA. The service provider SP1 may create the right KS12 in the electronic device SC by sending the right KS12 through a secure channel established thanks to the MNO. The electronic device SC may also generate a key which is sent to the service provider SP1. The onboard key generation technology is well known from a person skill in the art of secure electronic devices. The generated key is then used for identifying the right KS12 on service provider side. In all cases, the data exchanged between the service provider SP1 and the electronic device SC must remain confidential and not disclosed to the MNO.

The trusted service manager TSM gets an applicative data DA1 from the service provider SP1 and generates the loading command CD1 thanks to the limited rights KS12 at step S3. The command CD1 contains the data DA1 which is intended to be sent to the targeted applet AP. In a preferred embodiment, the command CD1 is a Store Data command as defined by the GlobalPlatform ® standard.

At step S4, the trusted service manager TSM sends the command CD1 to the MNO which sends the command CD1 to the SIM card SC via the Over The Air (OTA) mechanism.

Then the command CD1 is received by the SIM card SC and provided to the security domain SD1. At step S5, the command CD1 is executed in the security domain SD1.

After the command CD1 execution, the means M1 identifies a data DA2 which is related to the execution of the command CD1. For example, the data DA2 may comprise the answer of the command CD1. When the command CD1 is an APDU command according to ISO7816 standard, the data DA2 may comprise the status words SW1 and SW2 corresponding to the command CD1 or the CLA, P1, P2, P3 parameters. The data DA2 may also comprise the number of the command if several commands are sent in a batch. Alternatively the data DA2 may be any combination of the above-listed pieces of information. Then the means M3 generates a ciphered data DA10 from the data DA2 by using the limited right KS12 at step S6. Cryptographic algorithms usually used in smart card domain may be used for the data DA10 generation. For example, DES, 3-DEES or RSA algorithms may be used.

At step S7, the means M4 identifies a data DA3 which is related to the execution of the loading command CD1. For example, the data DA3 may comprise a date, an identifier of the targeted applet, an identifier of the electronic token SC, the address of the server that sent the command CD1, or any data related to the execution of command CD1. Then the means M4 generates a certificate CER from the data DA3 by using the specific data KS2 as a key. Cryptographic algorithms usually used in smart card domain may be used for the certificate CER generation.

At step S8, the means M5 records the ciphered data DA10 and the certificate CER into the transaction log L1.

If another applicative data is to be sent to the SIM card, an additional command may be generated and sent to the SIM card in a way similar to the command CD1.

If the trusted service manager TSM needs a proof of the correct execution of the command CD1 in the SIM card SC, an audit command AC1 is generated by the TSM. At step S9, the trusted service manager TSM sends the audit command AC1 to the MNO which sends the audit command AC1 to the SIM card SC via the Over The Air (OTA) mechanism. Then the audit command AC1 is received by the SIM card SC and provided to the security domain SD1. For example, the audit command AC1 may be of read record type. Alternatively the audit command AC1 may allow retrieving any subset of the transaction log content or the whole content of the transaction log L1.

At step S10, the audit command AC1 is executed in the security domain SD1. The means M6 extracts the ciphered data DA10 and the certificate CER from the transaction log L1 and sends DA10 and CER in response to the audit command AC1. Then the MNO provides the TSM with DA10 and CER. Thus the trusted service manager TSM gets DA10 and CER which corresponds to the execution of the command CD1. If the transaction log L1 is a cyclic file, the means M6 may get the content of the most recent record. Alternatively, the means M6 may get the content of the eldest record of the cyclic file L1.

At step S11, the trusted service manager TSM sends the ciphered data DA10 to the service provider SP1. The service provider SP1 retrieves the data DA2 by deciphering the data DA10 thanks to the limited right KS12. Thus the service provider SP1 may check that data DA2 is correct. For example, the service provider SP1 may check that a Store data command has been correctly executed in the SIM card SC. The data DA2 is intended to reflect the correct execution of the command CD1. If the execution of the command CD1 has not been successful, then the data DA2 provides the service provider SP1 with technical details which allow analyzing what was wrong. In such a case, the service provider SP1 is able to know what the current state of the security domain SD1 is. Since the service provider SP1 knows the current context of the SIM card, it may generate a new command intended to be sent to the SIM card for resuming the data loading.

An advantage of the invention is to allow the service provider SP1 to prepare a new command intended to resume the data loading by taking the current state of SIM card into account. In particular, the new command may contain the bare necessities for resuming the loading of data. For example, the invention avoids resending the whole of a script of commands. Since only essential commands will be sent to the SIM card, the bandwidth of the MNO is optimized.

At step S12, the trusted service manager TSM sends the certificate CER to the MNO. The MNO retrieves the data DA3 by deciphering the certificate CER thanks to the specific data KS2. Thus the MNO may check that data DA3 is correct. The data DA3 reflects the correct execution of a command sent to the security domain SD1 of the SIM card SC. For example, the MNO may check that a batch of several commands has been correctly downloaded and executed in a given SIM card.

In a preferred embodiment the specific data KS2 is built from the key Ki as defined by the GSM standard.

In another embodiment, the specific data KS2 is built from the identifier IDSC specific to the electronic device SC. In particular, the identifier IDSC may be the ICCID as defined by the SCP 102 221 standard. The identifier IDSC may be the MSISDN associated to the electronic device SC, where the MSISDN is defined by the GSM 11.11 standard. The identifier IDSC may be the AID of the targeted applet AP, where the AID is defined by the Javacard ® 2.1 standard. The identifier IDSC may be the AID of the security domain SD1. The specific data KS2 may be built from any identifier which allows to uniquely identify the electronic token SC.

The ciphered data DA10 and the certificate CER may correspond to the execution of a script of commands in the security domain SD1. In such a case the transaction log may store only one record corresponding to the whole script execution.

The invention may be used for many kinds of operations. In particular, the invention may be used for loading and installing a new application in a SIM card on the field. For example, the invention may be used for the reloading of ticket for transport, the downloading of e-coupon for loyalty, the installation of a banking application, the reset of a counter used by a banking application, the sending of an issuer script to a banking application for post-personalization purpose, etc.

Advantageously, the service provider SP1 may revoke the limited right KS12. In particular, the limited right KS12 may be revoked when the contract between the service provider SP1 and the trusted service manager is ended.

Alternatively, the invention may be implemented for the main security domain, i.e. for the Issuer security domain ISD.

Alternatively, the MNO may delegate the relevant rights for preparing OTA messages which encapsulate the commands CD1 and AC1. In this case the trusted service manager is able to generate the corresponding OTA messages.

The method according to the invention may only comprise the treatment of the ciphered data DA10 when no proof is required for the MNO. In this case the certificate CER is not managed.

Alternatively, the method according to the invention may comprise only the treatment of the certificate CER when no proof is required for the service provider SP1.

## Claims

1. A **method** of loading a first data (DA1) in an electronic device (SC), said electronic device (SC) comprising a security domain (SD1) associated to a first entity (SP1), said security domain (SD1) comprising a first key (KS11),
**characterized in that** said method comprises the step of:
a) allocating (S2) limited right (KS12) to a second entity (TSM) in said security domain (SD1).

2. A method according to claim 1, wherein said limited right (KS12) provides an authorization which is limited to the management of a loading command (CD1) intended to be executed by the electronic device (SC) for loading the first data (DA1) in the security domain (SD1) and to the use of an audit command (AC1) intended to be executed by the security domain (SD1), said audit command (AC1) allowing the second entity (TSM) to retrieve an audit data (DA10, CER) related to the loading command (CD1) execution.

3. A method according to claim 2, wherein said electronic device (SC) comprises a specific data (KS2), wherein said security domain (SD1) comprises a transaction log (L1), wherein said second entity (TSM) is intended to communicate with the electronic device (SC) through a mobile telecom network managed by a third entity (MNO),
and wherein said method comprises the steps of:
b) generating (S3) the loading command (CD1) by using said limited right (KS12),
b) sending (S4) the loading command (CD1) to the security domain (SD1),
c) after execution of said loading command (CD1), identifying (S6) a second data (DA2) related to the loading command (CD1) execution and generating a ciphered data (DA10) from the second data (DA2) by using the limited right (KS12),
d) identifying a third data (DA3) related to the loading command (CD1) execution and generating (S7) a certificate (CER) from said third data (DA3) by using said specific data (KS2) as a key,
e) recording (S8) the ciphered data (DA10) and the certificate (CER) into the transaction log (L1),
f) on receipt of the audit command (AC1), getting (S10) said ciphered data (DA10) and said certificate (CER) from the transaction log (L1), then sending the ciphered data (DA10) and the certificate (CER) to the second entity (TSM).

4. A method according to claim 3, wherein said method comprises the further steps of:
g) sending (S11) the ciphered data (DA10) to the first entity (SP1),
h) sending (S12) the certificate (CER) to the third entity (MNO).

5. A method according to one of claims 3 to 4,
wherein the electronic device (SC) comprises an identifier (IDSC) specific to said electronic device (SC) and wherein the specific data (KS2) is built from said identifier (IDSC).

6. A method according to one of claims 3 to 5,
wherein the security domain (SD1) comprises an identifier and wherein said specific data (KS2) is built from the identifier of the security domain (SD1).

7. A method according to one of claims 3 to 5,
wherein the first data (DA1) is intended to target an application (AP) belonging to the security domain (SD1), said application (AP) comprising an identifier and wherein said specific data (KS2) is built from the identifier of the application (AP).

8. A method according to one of claims 3 to 7,
wherein said ciphered data (DA10) and said certificate (CER) are generated for a set of several commands received by the security domain (SD1).

9. A **portable electronic device** (SC) comprising a security domain (SD1), **characterized in that** said portable electronic device (SC) comprises a first means (M1) able to manage a command allowing to create a limited right (KS12) in the security domain (SD1).

10. A portable electronic device (SC) according to claim 9, wherein said portable electronic device (SC) comprises a second means (M2) able to manage a command allowing creating a security domain (SD1) comprising a transaction log (L1).

11. A portable electronic device (SC) according to claim 10, wherein said security domain (SD1) is associated to a first entity (SP1), said security domain (SD1) being intended to comprise a targeted applet (AP), wherein said portable electronic device (SC) is intended to receive a loading command (CD1) for loading a first data (DA1) corresponding to the targeted applet (AP), and wherein said portable electronic device (SC) comprises limited right (KS12) in said security domain (SD1), said limited right (KS12) providing an authorization which is limited to the management of the loading command (CD1) intended to load the first data (DA1) in the security domain (SD1) and to the management of an audit command (AC1) intended to be executed by the security domain (SD1), said audit command (AC1) allowing to retrieve audit data (DA10, CER) related to the loading command (CD1).

12. A portable electronic device (SC) according to claim 11, wherein said security domain (SD1) comprises a first key (KS11), wherein said electronic device (SC) comprises a specific data (KS2), third, fourth, fifth, and sixth means (M3, M4, M5, M6),
wherein said third means (M3) is able to identify a second data (DA2) related to the loading command (CD1) execution and is able to generate a ciphered data (DA10) from the second data (DA2) by using the first key (KS11), wherein said fourth means (M4) is able to identify a third data (DA3) related to the loading command (CD1) execution and is able to generate a certificate (CER) from said third data (DA3) by using said specific data (KS2) as a key, wherein said fifth means(M5) is able to record the ciphered data (DA10) and the certificate (CER) into the transaction log (L1), and wherein said sixth means (M6) is able to send the ciphered data (DA10) and the certificate (CER) in response to an audit command (AC1).

13. A portable electronic device (SC) according to one of claims 9 to 12, wherein said portable electronic device (SC) is a smart card.
